## Europäisches Patentamt

## European Patent Office

## Office européen des brevets

(19)

(11) **EP 1 054 526 A1**

(12)

# EUROPEAN PATENT APPLICATION

(43) Date of publication:
**22.11.2000 Bulletin 2000/47**

(51) Int Cl.⁷: **H04L 1/12**, H04L 1/00

(21) Application number: **99303865.2**

(22) Date of filing: **18.05.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | • **Samaras, Konstantinos**<br>   **Swindon, Wiltshire SN2 2HL (GB)**<br>• **Yan, Ran-Hong**<br>   **Faringdon, Oxfordshire SN7 7SS (GB)** |
| (71) Applicant: **LUCENT TECHNOLOGIES INC.**<br>**Murray Hill, New Jersey 07974-0636 (US)** | (74) Representative: **Williams, David John et al**<br>**Lucent Technologies UK Limited,**<br>**5 Mornington Road**<br>**Woodford Green, Essex IG8 0TU (GB)** |
| (72) Inventors:<br>• **Demetrescu, Christian**<br>   **Swindon, Wiltshire SN5 8JZ (GB)** | |

(54) **Method and apparatus for link adaptation in telecommunications networks**

(57)    In an Enhanced Data rate for GSM Evolution (EDGE) type packet cellular network a transmitter (10, 14, 16) and a receiver (20, 22, 12) are arranged to operate in for example eight different modulation and encoding schemes. The transmitter and receiver are connected by a communication channel (24). In the receiver there are two counters (30, 32) and a comparator (34) arranged so that the counters count the number $N_e$ and $N_s$ of received consecutive erroneous and successful packets, and the number is compared with respective stored numbers, and when one of the stored numbers is equalled, a signal is supplied through the control channel (24) so that the transmitter and receiver switch to a more or a less robust modulation and encoding scheme as appropriate.

FIG. 2

Communication System with Link Adaptation

## Description

This invention relates to a method and apparatus for link adaptation in a telecommunications network, especially in EDGE-type packet cellular networks.

Enhanced Data rates for GSM Evolution (EDGE) is a proposal for the evolution of existing TDMA (Time Division Multiple Access) radio cellular systems in order to support higher transmission data rates and increase the capacity of these networks. The application of EDGE is not restricted only to GSM (Global System for Mobile Communications) cellular networks but it has also been accepted for the evolution of IS-136 systems by UWCC (Universal Wireless Communications Consortium). Enhanced data rates are achieved by introducing higher level modulation formats. Among the candidate modulation schemes are 8-PSK (8- Phase Shift Keying), Q-O-QAM (Quadrature-Offset-Quadrature Amplitude Modulation) and B-O-QAM (Binary-Offset-Quadrature Amplitude Modulation). With the introduction of these modulation schemes EDGE systems can offer bit rates up to approximately three times higher than standard GSM/GPRS/IS-136 systems.

A key concept of EDGE is that there are several combinations of modulation and coding schemes that the system is able to support simultaneously. In ETSI Tdoc SMG2 WPA 127/99, WPB 003/99, "Two Burst Based Link Quality Control Proposal for EGPRS" eight modulation/coding schemes (termed MCS-1 to MCS-8 based on 8-PSK and GMSK are proposed, while eight different modulation/coding combinations (ECS-1 to ECS-8) based on Q-O-QAM and B-O-QAM are described by P.Schramm, H. Andreasson, C. Edholm, N. Edvardsson, M. Hook, S. Javerbring, F. Muller, J. Skold, "Radio Interface Performance of EDGE, a Proposal for Enhanced Data Rates in Existing Digital Cellular Networks", Proc. of 1998 IEEE Vehicular Technology Conference, pp. 1064-1068, and A. Furuskar, M. Frodigh, H. Olofsson, J. Skold, "System Performance of EDGE, a Proposal for Enhanced Data Rates in Existing Digital Cellular Systems", Proc. of 1998 IEEE Vehicular Technology Conference, pp. 1284-1289, respectively.

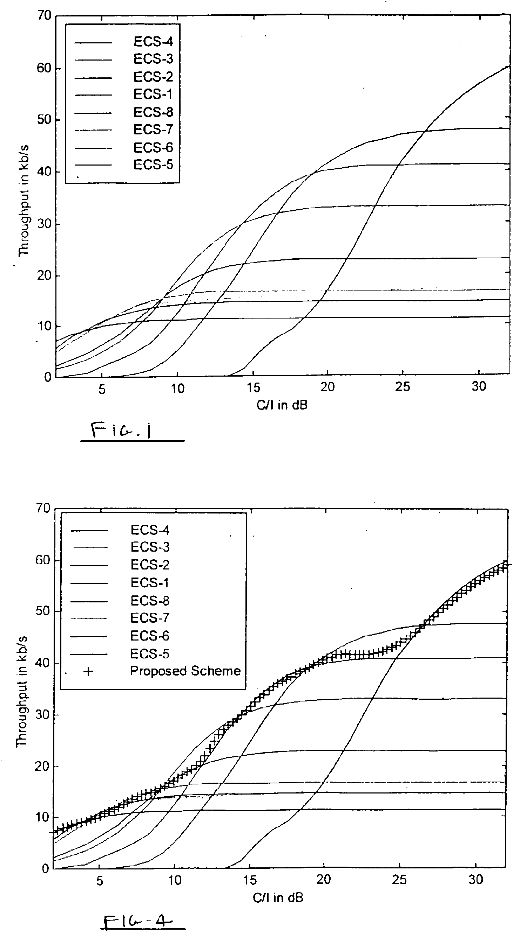

As an example, Figure 1 shows the throughput performance in KB/S versus C/I (dB) with an eight modulation/coding scheme proposed in the references by Schramm et al and Furuskar et al. An optimum link adaptation arguably would select the modulation/coding scheme which gives the maximum throughput for each C/I value, the performance curve corresponding with the upper envelope of these curves.

These different combinations of modulation/coding schemes offer different levels of transmission rates and different levels of transmission quality (in terms of error protection and robustness against channel errors). Schemes with higher transmission rates offer a lower degree of error protection. Therefore, the system must be able to select the best modulation/coding scheme according to the channel conditions. This is known as Link Adaptation (LA).

In order to provide LA a Link Quality Control (LQC) mechanism (algorithm) is required. This mechanism should be able to take decisions on which modulation/coding scheme is the most appropriate to use under the existing channel conditions therefore, it will provide a switching method between the alternative modulation/coding schemes. Different modulation/coding schemes are favourable under different channel conditions. The algorithm should be designed in such a way so that its application would lead to maximisation of data throughput while maintaining a low signalling overhead.

In order to generically describe the operation of LA algorithms we assume that there are M alternative modulation/coding schemes available. Each of these schemes $n = 1, ...., M$ is characterised by its throughput vs. C/I performance curve, denoted as:

$$S_n(C/I) = R_n \cdot (1 - BLER\ (n, C/I)) \qquad (1)$$

where $S_n(C/I)$ is the throughput (in kb/s) of the $n$-th modulation/coding scheme as a function of C/I, $R_n$ is the maximum possible data rate (in kb/s) of the $n$-th modulation/coding scheme and $BLER(n, C/I)$ is the Block Error Rate of the $n$-th modulation/coding scheme as a function of C/I. The theoretically optimum LA algorithm selects the optimum among the $M$ available coding schemes according to the following criterion:

$$n_{opt}(C/I) = \arg\max\{S_n(C/I)\}$$

$$n \square \square 1, 2, ...., M\}$$

However, due to complexity considerations, the implementation of this algorithm is not feasible in practical systems. Therefore, a less complex algorithm is required.

There are a few sub-optimal schemes proposed for LA. The most common approach is to define static thresholds (switching points) in terms of Carrier-to-interference (C/I) ratios. The major drawback of this approach is that it is very difficult to define static switching points since their selection depends on a variety of parameters that are not a priori known to the system. These are: the propagation environment, the speed of the mobile stations, the use or not of frequency hopping, to name a few. Therefore, a particular selection of C/I switching points based on specific radio propagation parameters does not necessarily lead to good system performance when these parameters change (which is very common in radio environments). Thus, there is always a performance compromise involved when this simplistic LA approach is adopted. A second approach for LA involves the measurement of Bit Error Rates (BER). A particular modulation/coding scheme is chosen based on the BER value measured at the receiver. According to this scheme the BER is estimated on a burst basis. However, this is a short term estimate and it involves large inaccuracies since normally the BER is estimated from the 26 training sequence symbols on GSM/EDGE-type systems. A long term BER estimation would be more accurate but unfortunately it is not possible in digital cellular networks due to latency considerations. Finally, all these schemes rely on measurements which significantly increase the signalling load and the receiver complexity.

The object of the invention is to provide an improved method of link adaptation, and apparatus for implementing such a method.

According to the invention, in a packet switching cellular telecommunications network operable in a plurality of different modulation and encoding schemes, a method of link adaptation characterised by determining the number of consecutive erroneous packet transmissions, $N_e$ and the number of consecutive successful packet transmissions, $N_s$, and when $N_e$ equals a predetermined number, switching the network to operate in a more robust modulation and encoding scheme, and when $N_s$ equals a predetermined number, switching the system to operate in a less robust modulation and encoding scheme.

It is an advantage of the invention that it is not necessary to measure the Bit Error Rate (BER), or to set predefined C/I thresholds which heavily depend on the propagation conditions.

Preferably, the numbers $N_e$ and $N_s$ are determined by monitoring the outcomes of the error detection process, which normally relies in codes, such as CRC (Cyclic Redundancy Code) codes conventionally provided within the system to protect transmitted data from channel errors.

Optionally the network is operable in more than two modulation and coding schemes, for example eight schemes, or a substantially greater number of schemes.

Said predetermined numbers may be the same for switching to a more robust or a less robust scheme, or may be different depending on the direction of switching. Said predetermined numbers may be the same for switching in the same direction between all adjacent schemes, or may vary between different adjacent schemes.

Also according to the invention a packet switching cellular telecommunications network comprising a transmitter to transmit packets, a receiver to receive packets, the transmitter and the receiver being arranged to operate in a plurality of different modulation and encoding schemes and there being a control communication channel between the transmitter and the receiver; in the receiver counting means arranged to count the number $N_e$ of consecutive erroneous packet transmissions and to count the number $N_s$ of consecutive successful packet transmissions, and comparison means to compare No and $N_s$ with respective stored numbers, and when one of $N_e$ or $N_s$ equals its respective stored number, to supply a signal through the control channel so that the transmitter and the receiver switch to a more or a less robust modulation and encoding scheme as appropriate.

The invention will now be described by way of example with reference to the accompanying drawings in which :-

Figure 2 indicates schematically a communication system according to invention;

Figure 3 illustrates schematically the operation of the apparatus of figure 2; and

Figure 4 illustrates the simulated performance of the described apparatus.

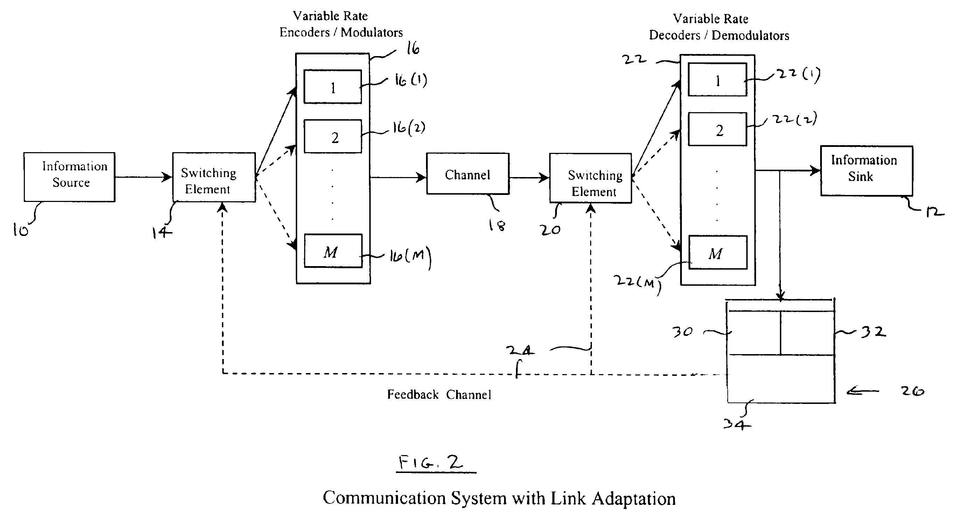

In figure 2, an EDGE-type packet cellular network comprises an information source 10 (such as a first telephone capable of handling packets) communicating with an information sink 12 (such as a second telephone). The information source 10 is connected to a transmitting switching element 14 which can be connected to one of a number M of transmitting variable rate encoder/modulator systems 16(1) to 16(M). The selected transmitting system 16 is connected to the delivery channel 18 and through a receiving switching element 20 to one of a number M of receiving variable encoder/modulator systems 22(1) to 22(M). The output of the selected system 22 is connected to the information sink 12.

The transmitting and receiving switching elements 14, 20 are connected through a feedback channel 24 which ensures that matching encoder/modulator systems 16, 22 operate at the same time.

A link adaptation system 26 is connected to the feedback channel 24, and receives signals from the receiving decoder/demodulator system 22.

The receiving decoder/demodulator system 22, as is conventional, implements an error detection code, such as a CRC code which is independent of the channel forward error correction technique used, which in GSM/EDGE-type systems is normally a convolutional code. When a received data packet fails the CRC check, and the system operates in an acknowledged mode, the receiving system sends an error indication (NACK) back to the transmitter; when the CRC check is successful, a positive acknowledgement (ACK) is sent, in both cases via the feedback channel 24.

These signals are utilised by the link adaptation system 26. The system comprises two counters 30, 32 and a processor 34. The processor can be set to contain a required threshold number for each counter, for example ten. Initially, both the counters 30 and 32 are set to zero.

The system is arranged that signals indicating successful packet transmission are directed to counter 30, which increments by one for each signal. Suppose there are only eight successful consecutive packets and the ninth packet is unsuccessful. The signal indicating an unsuccessful packet is directed to the counter 32 which increments by one and the counter 30 is set to zero. If ten consecutive unsuccessful packets are received, so that the threshold set for the counter 32 is reached, the processor 35 sends a signal through the feedback channel 24 so that both the encoder/modulator systems 16, 22 are switched to a more robust scheme. If ten consecutive successful packets are received, the system is switched to a less robust scheme, which of course is faster.

Consider now a general link adaptation arrangement when there are *M* possible modulation/coding schemes available. Without loss of generality it is assumed that the different modulation schemes are classified in ascending order in terms of the maximum transmission rate they offer. That is, modulation/coding scheme 1 offers the most robust protection against channel errors at the expense of low transmission rate, whilst modulation/coding scheme *M* offers the highest possible transmission rate but it gives minimal protection against errors. When modulation/coding scheme *n* is used, it is said that the system is in state *n*. The transitions of the system between different states are described by the elements of a square *M* x *M* matrix $\mathbf{P} = [p_{ij}], i,j \in \{1,...,M\}$. The elements of matrix $\mathbf{P}$ take binary values (0 or 1). In each row (say i) of $\mathbf{P}$ there are only two elements with value 1. If $p_{ij} = 1, j \square i$, this means that when the system is in state *i* and a decision to switch to a more robust scheme is taken, the system goes to state *j*. If $p_{ij} = 1, i \square j$, then when the system is initially found in state *i* and it needs to select a less robust transmission scheme, then it goes to state *j*. If $p_{ij} = 0$, this means that when the system is in state *i* it cannot switch to state *j*. Furthermore, it is assumed that $p_{11} = 1$, $P_{MM} = 1$. These conditions simply mean that states 1 and *M* are the two extreme states of the system. For example, if the system is in state 1 it is not possible to switch to a more robust state even if the number of consecutive erroneous transmissions exceeds the predefined threshold. In order to avoid trivial algorithms, all elements of the matrix diagonal except the first and the last should be set to 0. Furthermore, in each row *i* of the matrix, with $2 \square i \square M - 1$, the first non-zero element should be placed to the left hand side of the main diagonal and the second non-zero element should be placed to the right hand side of the main matrix diagonal. The decision criteria for switching between states are described by two vectors of *M* - 1 elements each.

The first vector $\mathbf{c_1} = \llcorner c_{12}, c_{13},...,c_{1,M} \lrcorner$ defines the number of erroneous transmissions required by the system in order to take a decision to switch to a lower state (more robust transmission). For example, $c_{1j} = 3$ means that when the system is in state j, $2 \leq j \leq M$ it requires three consecutive erroneous transmissions in order to switch to a more robust state (which is defined by

matrix $\mathbf{P}$). The second vector $\mathbf{c_2} = \llcorner c_{21}, c_{22},...,c_{2,M-1} \lrcorner$ defines the number of the consecutive successful packet transmissions required, in order for the system to take a decision to switch to a less robust state (with higher transmission rate). For example, $c_{2j} = 5$, simply means that when the system is found in state *j*, $1 \leq j \leq M-1$, it requires 5 consecutive successful packet transmissions in order to switch to a higher state (defined by the non-zero element of matrix $\mathbf{P}$, which is in the *j-th* row and to the right hand side of the main diagonal).

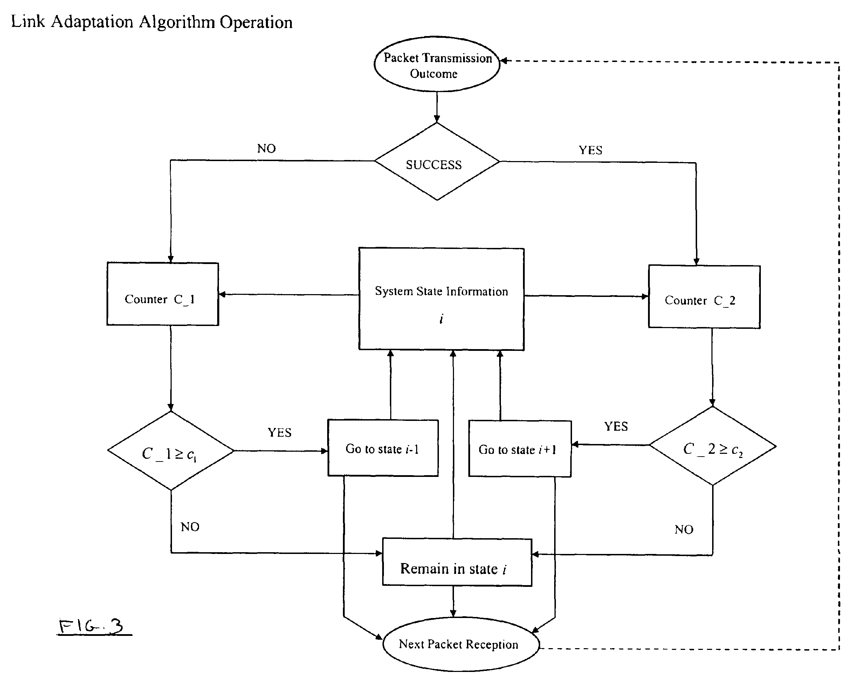

The implementation of this algorithm is illustrated in Figure 3. The counters 30, 32 of Figure 2 arc indicated by (C_1 and C_2). One of them (C_1) counts the number of consecutive erroneous packet transmissions and the other (C_2) counts the number of consecutive successful packet transmissions. As far as the counting process is concerned we note the following:

• Initially, both counters are set to zero.
• During the transmission process, if the transmission outcome is negative (errors detected by the CRC check) then the content of C_1 is increased by one. The content of C_2 is set to zero. Then the content of C_1 is compared with the switching threshold (the appropriate element of vector $\mathbf{c_1}$, depending on the current state of the system). If it is less than the switching threshold, the system remains in the same state. If it is equal to that threshold, the system takes a decision to switch to another state, which is defined by $\mathbf{P}$, and the content of C_1 is set to zero.
• During the transmission process, if the transmission outcome is positive (no errors detected by the CRC check) then the content of C_2 is increased by one. The content of C_1 is set to zero. The content of C_2 is compared with the appropriate element of vector $\mathbf{c_2}$ and a state transition is decided or not depending on the comparison outcome as above. In case a transition is decided, the content of C_2 is set to zero.
• When the system is in state 1, then counter C_1 is not used, since there is no lower order state to switch to. Similarly, when the system is in state *M*, counter C_2 is not used since this is the higher order state.

It is clear from the above description of the algorithm, that its operation does not rely on any kind of measurements (C/I, BER). This makes the implementation easier compared with other proposals. Furthermore, the operation of the proposed algorithm does not require a priori knowledge of the radio propagation conditions, since the observable quantities required for its operation are readily available at the CRC decoder output in the receiver (binary decisions: correct or erroneous packet transmissions).

In Figure 1, the throughput performance of the eight different modulation/coding schemes is depicted. The propagation environment is Typical Urban (TU3) and ideal frequency hopping is assumed. Different propagation assumptions would lead to different throughput performance. An ideal Selective Repeat ARQ protocol is assumed, for the purposes of this example. From this diagram it is seen that each modulation/coding scheme (ECS-1 ,...., ECS-8) is optimum over a specific range of C/I values. An ideal LA algorithm would select each of these schemes according to Eqn.(2) and the throughput curve for this ideal system would be the envelope of all eight throughput curves. However, as noted previously such a scheme is not practically feasible.

In Figure 4 the simulated performance of the proposed algorithm is also depicted and it is seen that the throughput rate achieved is very close to the optimum LA algorithm. Referring to the previous section the parameters of the algorithm are as follows:

$c_1 = [2\ 2\ 2\ 2\ 2\ 1\ 1]$
$c_2 = [30\ 30\ 30\ 30\ 30$
$30\ 30]$

$$P = \begin{bmatrix} 1 & 1 & 0 & 0 & 0 & 0 & 0 & 0 \\ 1 & 0 & 1 & 0 & 0 & 0 & 0 & 0 \\ 0 & 1 & 0 & 1 & 0 & 0 & 0 & 0 \\ 0 & 0 & 1 & 0 & 1 & 0 & 0 & 0 \\ 0 & 0 & 0 & 1 & 0 & 1 & 0 & 0 \\ 0 & 0 & 0 & 0 & 1 & 0 & 1 & 0 \\ 0 & 0 & 0 & 0 & 0 & 1 & 0 & 1 \\ 0 & 0 & 0 & 0 & 0 & 0 & 1 & 1 \end{bmatrix}$$

Therefore, in this particular example only transitions between neighbouring states are allowed. For example if the system is in state 5, then when a decision to switch to a higher transmission rate state is taken, the system goes to state 6. Alternatively, when a decision is taken for the system to switch to a more robust modulation/coding scheme, the system goes to state 4. In all cases, 30 consecutive correct packet transmissions are required in order for the system to switch to a higher transmission rate state. One or two consecutive erroneous transmissions are needed for the system to switch to a more robust state. It is noted that the performance of the algorithm is not overly dependent on the selection of these parameters but as a rule of thumb we have found through experimentation, that higher values for the elements of vector c2 give in general better performance. Smaller values of these elements make the algorithm to respond faster to channel condition changes but it is likely that false alarms may arise. Therefore, the above values for the elements of vectors $c_1$ and $c_2$ can be used in practical systems that employ LA. The high values of the elements of vector $c_2$ guarantee that the channel conditions have improved before the algorithm decides a state transition to a less robust mode. This also means that most of the time frequent state changes are avoided; this is an important attribute of the proposed algorithm, since it minimises the required feedback signalling. However, the final decision for the exact values of these parameters is a problem specific to the actual implementation and it is left open to the system designers.

**Claims**

1. In a packet switching cellular telecommunications network operable in a plurality of different modulation and encoding schemes, a method of link adaptation characterised by determining the number of consecutive erroneous packet transmissions $N_E$ and the number of consecutive successful packet transmissions, $N_S$, and when $N_E$ equals a predetermined number, switching the network to operate in a more robust modulation and encoding scheme, and when $N_s$ equals a predetermined number, switching the system to operate in a less robust modulation and encoding scheme.

2. A method according to claim 1 in which $N_E$ and $N_s$ are determined by monitoring the error detection code provided within said network.

3. A packet switching cellular telecommunications network comprising a transmitter (10, 14, 16) to transmit packets, a receiver (20, 22, 12) to receive packets, the transmitter and the receiver being arranged to operate in a plurality of different modulation and encoding schemes (16(1)) to 16(M), 22(1) to 22(M)), and there being a control communication channel (24) between the transmitter and the receiver; in the receiver counting means (30, 32) arranged to count the number $N_e$ and $N_s$ of consecutive received erroneous and successful packets, and comparison means (34) to compare the values of $N_e$ and $N_s$ with respective stored numbers stored in the storage means, and when either $N_e$ or $N_s$ equals said respective stored numbers to supply a signal through the control channel (24) so that the transmitter and receiver switch to a more or less robust modulation and encoding scheme as appropriate.

4. A network according to claim 3 which is Enhanced Data rate for GSM Evolution (EDGE) network.

5. A network according to claim 3 or claim 4 in which the number of modulation and encoding schemes is 8 or more.

**EP 1 054 526 A1**

6.  A network according to any one of claims 3, 4 or 5 further comprising error detection code monitoring means connected to the counting means (30, 32).

7.  A network according to any one of claims 3, 4, 5 or 6 in which the storage means (34) in which the stored numbers are stored can be varied so that $N_E$ and $N_s$ are different for different adjacent modulation and encoding schemes (16, 22).

FIG. 1

FIG. 4

Variable Rate
Encoders / Modulators

Variable Rate
Decoders / Demodulators

Information
Source

Switching
Element

1  16 (1)

2  16 (2)

M  16 (M)

16

Channel

Switching
Element

1  22 (1)

2  22 (2)

M

22

22 (M)

Information
Sink

10

14

18

20

12

30

32

24

26

34

Feedback Channel

FIG. 2

Communication System with Link Adaptation

EP 1 054 526 A1

8

Link Adaptation Algorithm Operation

Packet Transmission Outcome

SUCCESS

YES

NO

Counter C_2

Counter C_1

System State Information $i$

$C\_2 \geq c_2$

$C\_1 \geq c_1$

YES

NO

YES

NO

Go to state $i+1$

Go to state $i-1$

Remain in state $i$

Next Packet Reception

FIG. 3

**European Patent Office**

**EUROPEAN SEARCH REPORT**

Application Number

EP 99 30 3865

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 701 923 A (KAWABE MANABU ET AL) 20 October 1987 (1987-10-20) * column 1, line 9 - line 12 * * column 7, line 25 - line 28 * * column 7, line 38 - line 43 * * column 8, line 13 - line 51 * | 1-7 | H04L1/12 H04L1/00 |
| Y | EP 0 794 631 A (KOKUSAI DENSHIN DENWA CO LTD) 10 September 1997 (1997-09-10) * page 5, line 51 - page 6, line 3 * | 1-7 | |
| Y | EP 0 903 883 A (LUCENT TECHNOLOGIES INC) 24 March 1999 (1999-03-24) * column 3, line 35 - line 47 * | 1-7 | |
| A | WO 96 02096 A (MOTOROLA INC) 25 January 1996 (1996-01-25) * abstract * * page 4, line 21 - page 5, line 2 * | 1-7 | |
| A | EP 0 790 713 A (LUCENT TECHNOLOGIES INC) 20 August 1997 (1997-08-20) * page 4, line 21 - line 22 * * figures 2,3 * | 5 | TECHNICAL FIELDS SEARCHED (Int.Cl.7) H04L |

The present search report has been drawn up for all claims

| Place of search | Date of completion of the search | Examiner |
|---|---|---|
| THE HAGUE | 26 October 1999 | Ghigliotti, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 99 30 3865

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-1999

| Patent document cited in search report | | Publication date | Patent family member(s) | | Publication date |
|---|---|---|---|---|---|
| US 4701923 | A | 20-10-1987 | JP | 1973604 C | 27-09-1995 |
| | | | JP | 6097748 B | 30-11-1994 |
| | | | JP | 61163727 A | 24-07-1986 |
| | | | JP | 1762356 C | 28-05-1993 |
| | | | JP | 4053337 B | 26-08-1992 |
| | | | JP | 61164352 A | 25-07-1986 |
| | | | CA | 1235189 A | 12-04-1988 |
| | | | DE | 3685962 A | 20-08-1992 |
| | | | EP | 0188271 A | 23-07-1986 |
| EP 0794631 | A | 10-09-1997 | JP | 9298526 A | 18-11-1997 |
| | | | US | 5907563 A | 25-05-1999 |
| EP 0903883 | A | 24-03-1999 | JP | 11164373 A | 18-06-1999 |
| WO 9602096 | A | 25-01-1996 | US | 5490168 A | 06-02-1996 |
| | | | AU | 676439 B | 06-03-1997 |
| | | | AU | 2472795 A | 09-02-1996 |
| | | | CA | 2167945 A | 25-01-1996 |
| | | | CN | 1130452 A | 04-09-1996 |
| | | | EP | 0717893 A | 26-06-1996 |
| EP 0790713 | A | 20-08-1997 | US | 5722051 A | 24-02-1998 |
| | | | CA | 2196114 A | 14-08-1997 |
| | | | JP | 9233021 A | 05-09-1997 |

EPO FORM P0459

For more details about this annex : see Official Journal of the European Patent Office, No. 12/82